# EUROPEAN PATENT SPECIFICATION

(11) **EP 2 728 818 B1**
(45) Date of publication and mention of the grant of the patent: **30.09.2015**
(21) Application number: 13190916.0
(22) Date of filing: 30.10.2013
(51) Int. Cl.: H04L 12/911, H04L 12/801, H04L 12/825, H04L 12/70

(54) **Systems and methods of bandwidth allocation**
Systeme und Verfahren zur Bandbreitenzuteilung
Systèmes et procédés d'attribution de largeur de bande

(30) Priority: 01.11.2012 US 201213666510
(43) Date of publication of application: 07.05.2014
(73) Proprietor: General Electric Company, Schenectady, New York 12345 (US)
(72) Inventor: Grewal, Ajay Pal Singh, Rochester, NY New York 14620 (US); Leung, David Kim-Yung, Rochester, NY New York 14620 (US)
(74) Representative: Cleary, Fidelma

(56) References cited:
- US-A1- 2002 154 656
- US-A1- 2006 156 365
- US-A1- 2012 257 607

## Description

### BACKGROUND OF THE INVENTION

The subject matter disclosed herein relates to wireless network systems, and more specifically, the dynamic allocation of bandwidth within wireless network systems.

Certain wireless networks, such as industrial plant control and monitoring networks, require that any two devices on the network first request bandwidth from a central resource manager in order to establish a communication path. The central resource manager, generally called the system manager, pre-allocates network bandwidth before the two devices can communicate i.e., exchange application data. For example, a gateway device used to transfer firmware to a remote device makes a request for a certain network bandwidth towards the remote device and vice versa. Once bandwidth is allocated, the gateway can initiate a firmware transfer using a firmware transfer protocol. However, the available bandwidth of the network may vary over short or long durations of time due to different network configurations, varying RF conditions, and different data flows implemented by the designer or user. Consequently, the bandwidth requested by the gateway device for a firmware transfer may not be available, resulting in a bandwidth allocation refusal and, hence, firmware transfer failure.

US 2002/0154656 describes a way of managing bandwidth in a network supporting variable bit rate. An apparatus comprises an interface to transmit data to a receiving device and a controller communicatively coupled to the interface, the controller configured to detect a bit rate change event and transmit a first portion of the data using reserved bandwidth and a second portion of the data using unreserved bandwidth in response to detecting the bit rate change event.

It would be beneficial to provide a method to successfully obtain minimum bandwidth needed for a firmware transfer under these varying network conditions.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

The invention resides in a method for dynamic allocation of bandwidth within wireless network systems, a computer program and a device as defined in the appended claims.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of an industrial plant control and monitoring wireless mesh network system;
FIG. 2 is a schematic diagram of another embodiment of an industrial plant control and monitoring wireless mesh network system; and
FIG. 3 is a flowchart of embodiments of a process suitable for allocating bandwidth in the wireless mesh network systems of FIG. 1 and FIG. 2.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Present embodiments relate to wireless mesh network systems that use a gateway and mesh node configuration to execute methods of dynamic network bandwidth allocation. The wireless mesh network systems and methods increase the reliability and robustness of the network in performing routine tasks by attempting the procedure at a maximum bandwidth (i.e., data transfer rate), and on failure, requesting successive reduced bandwidths (i.e., data transfer rates), until a minimum sufficient amount of bandwidth (i.e., data transfer rate), is allocated to perform the task. Such tasks may include performing firmware transfers, configuring remote field devices, collecting process data from remote field devices, and so forth. As used herein, a firmware transfer may refer to a firmware download, upload, upgrade, update, or some combination thereof. It should also be appreciated that the methods described herein are applicable to any form or data transfer, and not solely firmware transfers.

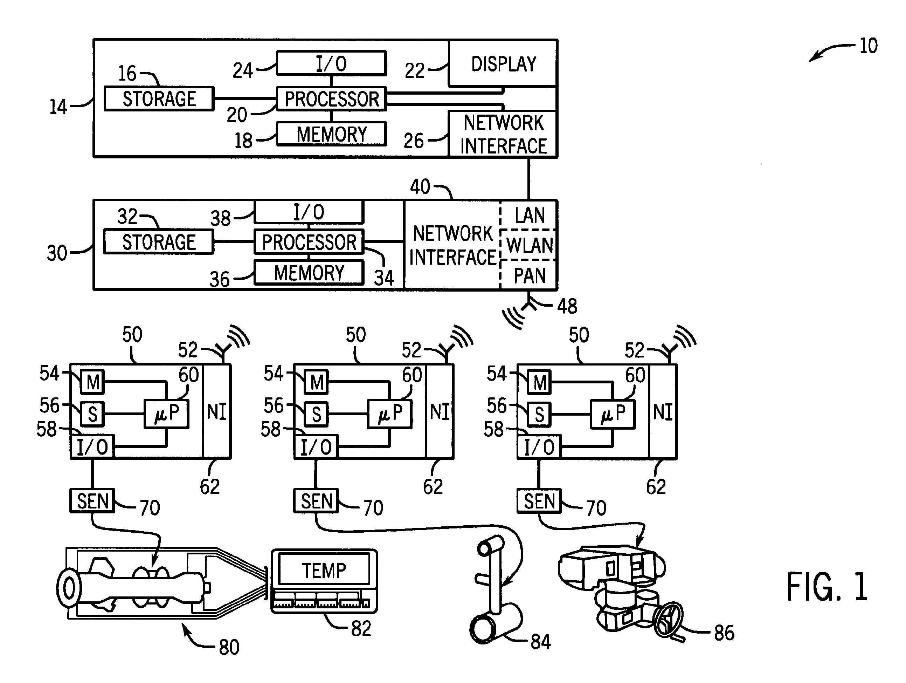

With the foregoing in mind, FIG. 1 is a schematic diagram of a wireless mesh network system 10, which includes a computer 14, an embedded gateway device 30, and a number of remote field devices 50 each coupled to a variety of industrial process equipment, such as a turbine system 80 and temperature display 82, a valve 84, and a pump 86. The wireless mesh network system 10 may be utilized in applications where radio frequency (RF) range, lower bandwidth data rates, and simple connectivity and battery usage are of concern. The wireless mesh network system 10 may also allow for communication in a peer-to-peer, point-to-point, or point-to-multipoint configuration. For example, a single gateway, or other central coordinating device, may communicate to a number of remote mesh node radios. Even in applications where the range between two points may be beyond the range of the two radios located at those points, the wireless mesh network system 10 may be configured such that intermediate mesh node radios relay data to and from the desired radios. Moreover, the wireless mesh network system 10 may also be implemented using a variety of RF protocols. For example, in industrial wireless communication networks, the wireless mesh network system 10 may include a WirelessHart, ISA100.11a, or ZigBee wireless networking protocol technology.

In an embodiment, the wireless mesh network system 10 includes a computer 14, which may include a processor 20 and/or other data processing circuitry that may be operatively coupled to a memory 18 and storage 16 to execute instructions for carrying out presently disclosed methods. These instructions may be encoded in programs stored in tangible non-transitory computer-readable medium such as the storage 16 and/or the memory 18. The processor 20 may also support an operating system (i.e., a particular program) capable of running software applications and systems (e.g., a web browser or a system manager). The instructions and programs may be stored in any suitable article of manufacture that includes at least one tangible non-transitory, computer-readable medium that at least collectively stores these instructions or routines, such as the memory 18 and/or the storage 16.

The memory 18 and the storage 16 of computer 14 may include, for example, random-access memory, read-only memory, rewritable memory, flash memory, hard drive(s), and/or optical discs. The computer 14 may also include a display 22 for displaying, for example, a graphical user interface (GUI) and/or data related to communications within the wireless mesh network system 10. Additionally, the computer 14 may include input/output (I/O) ports 24 for connection to external devices (e.g., a USB, mouse, keyboard, etc.) as well as a network interface 26. The network interface 26 may provide communication via a personal area network (PAN) (e.g., WirelessHart), a local area network (LAN) (e.g., Wi-Fi), a wide area network (WAN) (e.g., 3G or LTE), a near field communication device (NFC), a physical connection (e.g., an Ethernet connection), and/or the like. Through the network interface 26, the computer 14 may be part of a communication network across which data related to firmware transfers or other software instructions may be transmitted and received.

In certain embodiments, the wireless mesh network system 10 may also include an embedded gateway device 30 communicatively coupled to computer 14. As used herein, the embedded gateway device 30 refers to a device used to connect at least two network-connected computers or other electronic devices (e.g., laptops, mobile phones, radios, etc.) that use different network protocols. For example, in one embodiment, a computer 14 connected to a Wi-Fi or LAN network protocol may need to communicate to a remote field device 50 connected to a WirelessHart network protocol. The embedded gateway device 30 may transfer the data packets or frames from one network connection to the other, reformatting the data as required. The embedded gateway device 30 may also support an operating system and run software applications and systems.

Furthermore, the embedded gateway device 30 may also include a processor 34, a memory 36, a storage 32, input/output (I/O) ports 38, and a network interface 40. The processor 34 and/or other data processing circuitry that may be operatively coupled to the memory 36 and storage 32 to execute instructions for carrying out presently disclosed methods. For example, the processor 34, in conjunction with memory 36 and storage 32, may be configured to support an operating system to schedule tasks, manage storage, control input/output operations, handle communication with peripherals, and execute a various applications. Similar to the computer 14, the storage 32 and the memory 36 may be tangible non-transitory computer-readable medium. Additionally, like computer 14, the embedded gateway device 30 may include a network interface 40, which allows communication via a personal area network (PAN) (e.g., WirelessHart), a local area network (LAN) (e.g., Wi-Fi), a wide area network (WAN) (e.g., 3G or LTE), a physical connection (e.g., an Ethernet connection), and/or the like.

As depicted in FIG. 1, the embedded gateway device 30 may also include input/output ports 38 to connect to network interface 40, as well as other external devices. For example, the gateway device 30 may include RS-232/485 serial communication ports, in which data related to a firmware transfer or other configuration is transmitted to, or received from, the input/output (I/O) ports 24 of computer 14 via a 9-pin or 25-pin connector serial cable. The input/output ports 38, for example, may also be utilized to program fundamental parameters such as internet protocol (IP) addresses and passcodes of the embedded gateway device 30. In addition, a web-based configuration of embedded gateway device 30 may be performed by communicating to computer 14 via network interface 40 (e.g., LAN, PAN, or WLAN). For example, in accordance with an embodiment, a user may launch a management client (e.g., web browser) supported by computer 14, and configure embedded gateway device 30 by navigating to the respective internet protocol (IP) address assigned to the embedded gateway device 30.

Referring again to FIG. 1, the embedded gateway device 30 may also include one or more transceivers 48 for wireless communication to remote field devices 50. The transceivers 48 may each allow the embedded gateway device 30 to operate at various frequencies, and utilize an array of wireless technologies. For example, a particular transceiver 48 may be part of a mesh network embedded gateway device 30 operating at 2.4-2.48 gigahertz (GHz) Industrial, Scientific, and Medical (ISM) bands, or part of a cellular gateway device 30 operating in the frequency band of 800-900 megahertz (MHz). In certain embodiments, as part of wireless mesh network system 10, the transceivers 48 of the embedded gateway device 30 may each couple electromagnetically (e.g., RF, microwave, and so forth) to the transceivers 52 of remote field devices 50. The embedded gateway device 30 may comprise circuitry to perform the signal modulation and signal demodulation of wirelessly collected data, and may also include a light-emitting diode (LED) indicator display to indicate parameters such as power and network connectivity.

Corresponding to the embedded gateway device 30 depicted in FIG. 1, a number of remote field devices 50 may each include a processor 60, a memory 54, storage 56, an input/output (I/O) port 58, and a network interface 62. The processor 60 and/or other data processing circuitry may be operatively coupled to the memory 54 and/or storage 56 to execute instructions for carrying out presently disclosed methods. Similar again to the computer 14, the memory 54 and the storage 56 may be tangible non-transitory computer-readable medium. In certain embodiments, the processor 60 may periodically sample data from an electrically coupled sensor 70, and that data may be stored in memory 54 and storage 56. The remote field devices 50 may also each include input/output (I/O) ports 58, which may be used to configure the remote field devices 50. For example, an RS-232/485 port of each of the remote field devices 50 may connect via serial cable to an external device (e.g., Laptop, USB) to undergo configuration.

In certain embodiments, the remote field devices 50 may each be electrically coupled to a sensor 70. The sensor 70 may be a device for sensing a physical quantity related to process equipment such as a turbine system 80, a valve 84, and a pump 86. As will be appreciated, the remote field devices 50 may each physically and wirelessly couple to the embedded gateway device 30, and/or physically and wirelessly couple to other remote field devices 50 to transmit and receive data therebetween. For example, remote field devices 50 may each be electrically coupled to a given sensor 70, which may measure device operational characteristics, for example, the pressure at valve 84. The remote field devices 50 may each then process and record these operational characteristics and transmit the results wirelessly to embedded gateway device 30, or may relay the results to embedded gateway device 30 via another remote field device 50. The remote field devices 50 may also each include a light-emitting diode (LED) indicator display to indicate parameters such as power and network connectivity.

As previously discussed, the computer 14 and embedded gateway device 30 of FIG. 1 may each support an operating system capable of running software applications and systems. In certain embodiments, the computer 14 supports a management client, which may be a web browser supported by computer 14. The management client supported by computer 14 may be used to interface over a network with a management server supported by embedded gateway device 30. For example, a user of computer 14 may launch the management client supported by computer 14, sending a request message over the network to the management server supported by embedded gateway device 30. The management client of computer 14 then waits for a reply message. Once the management server of embedded gateway device 30 receives the request, the management server performs the requested task or locates the requested data and sends back a reply message to the management client of computer 14.

In addition to the management server, the embedded gateway device 30 may support host application, gateway, system manager, and backbone router software applications and systems. Each of the software applications and systems, or any combination thereof, may be stored in memory 36 and storage 32 and executed by processor 34, and may also access the input/output ports 38 and network interface 40. The host application of embedded gateway device 30 may provide data and services to the other software applications and systems, which may include data storage, file transfer, data processing, and so forth. The system manager supported by the embedded gateway device 30 may be responsible for, among others things, scheduling communications between applications and devices, managing and coordinating data routes, and allocating bandwidth to perform various tasks within the wireless mesh network system 10. For example, for an embedded gateway device 30 using an ISA100.11a protocol, the system manager may maintain the network by monitoring and collecting system computing resources such as bandwidth and storage, and subsequently schedule a task based on availability of the required computing resources. The backbone router of embedded gateway device 30 may serve as connection point between different communication networks of the embedded gateway device 30. For example, the host application and system manager may run as part of a WAN network, and the backbone router may connect the WAN network to a wireless mesh network (WMN).

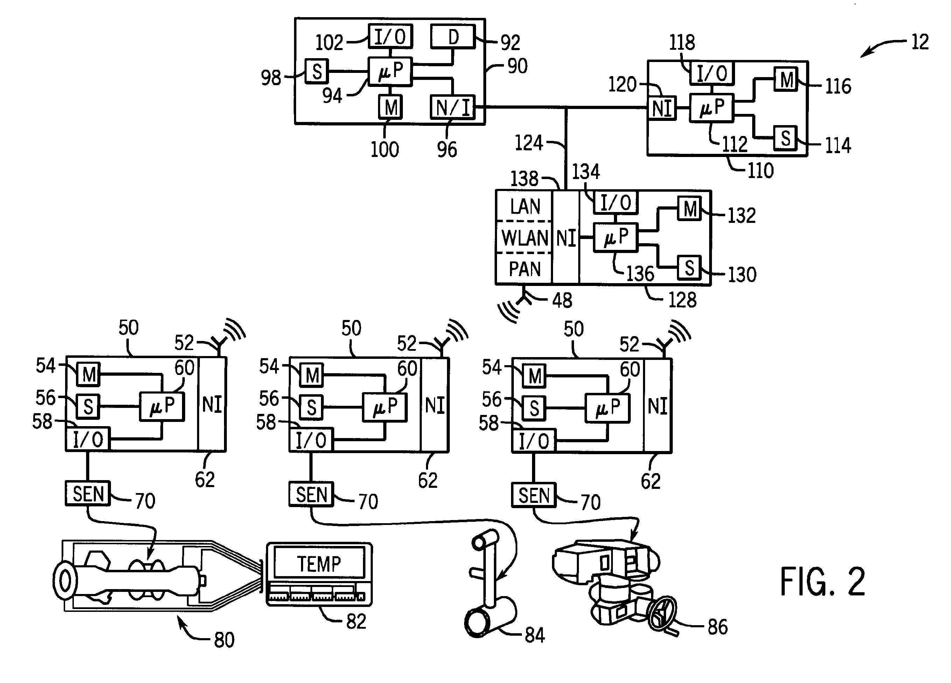

In other embodiments, it may be useful to store and execute the above noted management client, management server, and host application on a single supporting computer such as, the computer 14 of system 10 and/or the computer 90 of system 12 depicted in FIG. 2. It may be likewise useful to distribute the software applications and systems such as the above noted gateway, system manager, and backbone router amongst several supporting embedded devices. For example, as will be later discussed in further detail, performing tasks such as firmware transfers may first include communication between the management client and the management server, and then communication between the management server and the host application. In such the case that those software applications and systems (i.e., management client, management server, and host application) are stored and executed on a single computer 90, for example, the firmware transfer or similar task may be performed more cost-effectively due to the software applications and systems having local access to one another, as well as local access to computing resources and hardware. Likewise, by storing and executing the gateway and system manager on one separate supporting embedded device (e.g., embedded network device 110 depicted in FIG. 2), and storing and executing the backbone router on another separate supporting embedded device (e.g., embedded routing device 128 depicted in FIG. 2), computing and processing resources such as processor speed, memory and storage space, and network bandwidth may be improved. Such a configuration may also result in less expensive and more commercially viable hardware to implement the embedded devices.

Accordingly, FIG. 2 depicts a wireless mesh network system 12 configured much same way as wireless mesh network system 10 of FIG 1. The wireless mesh network system 12 may include a computer 90, an embedded network device 110, an embedded routing device 128, and a number of remote field devices 50 each coupled to a variety of industrial process equipment, such as a turbine system 80 and temperature display 82, a valve 84, and a pump 86. As discussed above, the wireless mesh network system 12 may implement a variety of RF network protocols such as, WirelessHart, ISA100.11a, or ZigBee. The wireless mesh network system 12 may also allow for communication in a peer-to-peer, point-to-point, and point-to-multipoint configuration.

Similar to wireless mesh network system 10 of FIG. 1, the wireless mesh network system 12 may include a computer 90, which may include a processor 94 and/or other data processing circuitry that may be operatively coupled to a memory 100 and storage 98 to execute instructions for carrying out presently disclosed methods. These instructions may be encoded in programs stored in tangible non-transitory computer-readable medium such as the storage 98 and/or the memory 100. The processor 94 may also support an operating system capable of running software applications and systems (e.g., web browser or system manager). The instructions may be stored in any suitable article of manufacture that includes at least one tangible non-transitory, computer-readable medium that at least collectively stores these instructions or routines, such as the memory 100 and/or the storage 98. The memory 100 and the storage 98 of computer 90 may include, for example, random-access memory, read-only memory, rewritable memory, flash memory, hard drive(s), and/or optical discs. The computer 90 may also include input/output (I/O) ports 102 and network interface 96. The network interface 96 may provide communication via a personal area network (PAN) (e.g., WirelessHart), a local area network (LAN) (e.g., Wi-Fi), a wide area network (WAN) (e.g., 3G or LTE), a near field communication device (NFC), a physical connection (e.g., an Ethernet connection), and/or the like.

In certain embodiments, the processor 94 in conjunction with memory 100 and storage 98 of computer 90 may be configured to support an operating system, and network interface 96 and input/output (I/O) ports 102 of computer 90 may be configured to communicate with embedded network device 110 and embedded routing device 128. The operating system of computer 90 may run, for example, host application, management client, and management server software applications and systems to perform various tasks and operations.

Furthermore, the computer 90 may couple communicatively to embedded network device 110, which may couple communicatively to embedded routing device 128 via a communications network 124. The communications network 124 may be a WAN, LAN, WLAN, PAN, and so forth. Like embedded gateway device 30 of FIG. 1 discussed above, embedded network device 110 may include a processor 112, a memory 116, a storage 114, input/output (I/O) ports 118, and a network interface 120. Each of the aforementioned subcomponents (i.e., processor 112, memory 116, storage 116, network interface 120, and input/output (I/O) ports 118) of embedded network device 110 may have the same functionalities and configurations as that of the embedded gateway device 30 of FIG. 1 discussed previously. For example, the processor 112 may support an operating system capable of running software applications and systems. Similarly, the embedded routing device 128 may include a processor 136, a memory 132, a storage 130, input/output (I/O) ports 134, and a network interface 138, as well as a transceiver 48. Again, each of the subcomponents (i.e., processor 136, memory 132, storage 130, network interface 138, and input/output (I/O) ports 134) may have the same functionalities and configurations as that of the embedded gateway device 30 of FIG. 1 discussed previously.

Additionally, as depicted in FIG. 2, the wireless mesh network system 12 may include a number of remote field devices 50 as discussed above. The remote field devices 50 may physically and wirelessly couple to embedded routing device 130 to transmit and received data therebetween. Similar again to FIG. 1, the remote field devices 50 may each electrically couple to sensor 70, which may be a device for sensing a physical quantity related to process equipment such as a turbine system 80, a valve 84, and a pump 86.

In present embodiments, the wireless mesh network system 10 of FIG. 1 and wireless mesh network system 12 of FIG. 2 may each be utilized and configured to implement techniques related to reliably performing firmware transfers, as will be discussed henceforth. The first technique includes a serial firmware transfer technique, in which the data packets or frames of a given firmware are transferred at an allocated bandwidth (i.e., data transfer rate), to one remote field device 50 per time period. The latter technique includes a parallel firmware transfer technique, in which the data packets or frames of a given firmware are concurrently transferred at an allocated bandwidth (i.e., data transfer rate), to a number of remote field devices 50 per time period. For purposes of illustration, the aforementioned firmware transfer techniques will be discussed with respect to the wireless mesh network system 10 of FIG. 1. However, it should be appreciated that the transfer techniques may also be performed utilizing the mesh network system 12 of FIG. 2.

As noted above, in certain embodiments, the management client supported by computer 14 may request the management server supported by embedded gateway device 30 to perform a firmware transfer to a number of remote field devices 50. Along with the request to perform the firmware transfer, the management client of computer 14 may deliver to the management server of embedded gateway device 30 the firmware data package to be transferred. The management server of embedded gateway device 30 may then request the host application of embedded gateway device 30 to execute the firmware transfers. In one embodiment, the host application requests, via the software gateway supported by embedded gateway device 30, the system manager to allocate a maximum bandwidth (e.g., 1 packet/second) to serially (i.e., one remote field device 50 per time period) execute a firmware transfer to a number of remote field devices 50 as a serial firmware transfer. The system manager sends a reply message with bandwidth availability of the respective remote field device 50 via the software gateway to the host application. If the maximum bandwidth (e.g., 1 packet/second) is available, the host application executes a firmware transfer to the respective remote field devices 50 by transmitting the firmware via the software gateway and backbone router over a network to the respective remote field devices 50. However, if the system manager determines that that the maximum bandwidth (e.g., 1 packet/second) is unavailable, the host application reduces its bandwidth allocation request by a predetermined value (e.g., 1 packet/3 seconds). The host application repeats the procedure of reducing the bandwidth allocation request until a minimum sufficient bandwidth (e.g., 1 packet/15 seconds) required to successfully execute the firmware transfer is attempted. Upon unavailability at the minimum bandwidth, the host application of embedded gateway device 30 may report to the management client of computer 14 a firmware transfer failure, and may retry the firmware transfer to the remote field devices 50 after a duration of time.

In another embodiment, the host application of embedded gateway device 30 may request, via the software gateway of embedded gateway device 30, the system manager of embedded gateway device 30 to allocate a minimum bandwidth (e.g., 1 packet/ 15 seconds) to concurrently (i.e., multiple remote field device 50 per time period) execute firmware transfers to a number of remote field devices 50. Accordingly, this transfer may be referred to as a parallel firmware transfer. The system manager sends a reply message with bandwidth availability of the respective number of remote field devices 50 via the software gateway to the host application. If the minimum bandwidth (e.g., 1 packet/ 15 seconds) is available, the host application executes a firmware transfer to the number of remote field devices 50 by transmitting the firmware via the software gateway and backbone router over a network to the respective remote field devices 50. For example, the host application may request that firmware transfers be concurrently executed to 6 remote field devices 50 at the minimum bandwidth (e.g., 1 packet/ 15 seconds). However, if the system manager determines that the minimum bandwidth (e.g., 1 packet/ 15 seconds) is unavailable on the number of remote field devices (e.g., 6 remote field devices 50), the host application reduces the number request by a predetermined value at the minimum bandwidth (e.g., 5 remote field devices 50 at a data transfer rate of 1 packet/15 seconds). The host application repeats the procedure of reducing the number request until a minimum number (e.g., 1 remote field device at a data transfer rate of 1 packet/15 seconds) required to successfully execute the firmware transfer is attempted. Upon unavailability at the minimum number and bandwidth, the host application of embedded gateway device 30 may report to the management client of computer 14 a firmware transfer failure, and may retry the firmware transfer after a duration of time.

As previously noted, the previously discussed serial firmware transfer and parallel firmware transfer may also each, or the combination thereof, be implemented utilizing the wireless mesh network system 12 as depicted in FIG. 2. The wireless mesh network system 12 may allow a different configuration in implementing the serial firmware transfer and parallel firmware transfer techniques. In certain embodiments, the computer 90 may be configured to support the host application, management client, and management server software applications and systems. Further, the embedded network device 110 may be configured to support the software gateway and system manager software applications and systems. Still further, the embedded routing device 128 may be configured to support the backbone router software application. As noted above, such a configuration may, for example, result in a more cost-effective implementation and utilization of computing and network resources and hardware.

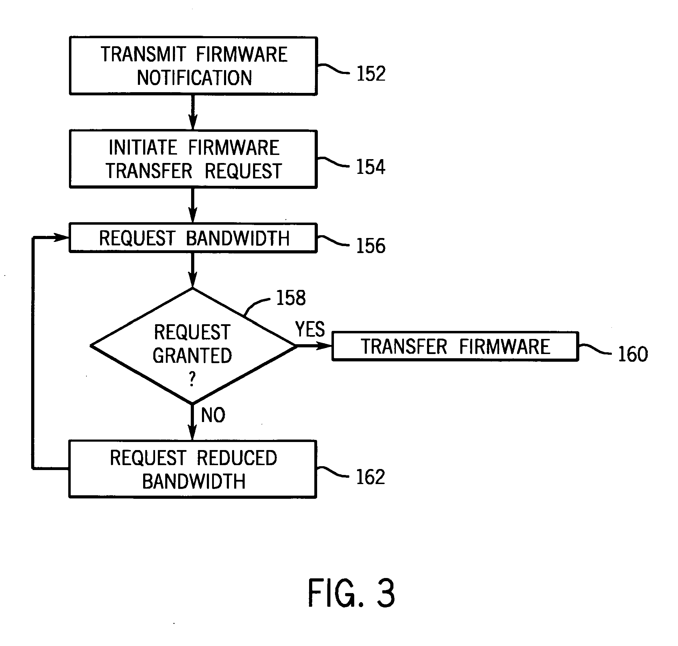

FIG. 3 illustrates a flow chart of the serial firmware transfer and parallel firmware transfer techniques as discussed previously. At block 152, a firmware transfer notification is transmitted. At block 154, a firmware transfer request is made by a host application. At block 156, the host application requests an allocation of bandwidth from a system manager. At block 158, the system manager determines if a firmware transfer may be serially executed on remote field devices 50 at a maximum bandwidth per the serial firmware transfer technique, or executed in parallel on a number of remote field devices 50 at a minimum bandwidth per the parallel firmware transfer technique. If the system manager grants the bandwidth allocation requests of the host application, the firmware is transferred to the remote field devices 50 at block 160. If the system manager refuses the bandwidth allocation requests of the host application, the host application requests a reduced bandwidth allocation at block 162, and the procedure is repeated at block 156.

Technical effects of the invention include methods related to performing firmware transfers over wireless mesh networks, where available network bandwidth may vary over long and short durations of time due the different mesh network configurations and data flows implemented by the user. The serial firmware transfer and parallel firmware transfer techniques as described herein provide a mechanism to increase reliability and robustness in performing firmware transfers under various network loading conditions. The invention increases reliability and robustness in performing firmware transfers by attempting the procedure, and on failure, requesting smaller bandwidth allocations successively until a minimum sufficient bandwidth to effectively perform the firmware transfer is allocated. By dynamically allocating bandwidth, a network system may not need to preemptively allocate bandwidth in anticipation of firmware transfers, thus providing more network bandwidth to perform unrelated applications.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method for dynamic allocation of bandwidth within wireless network systems, comprising:
generating a first request via a host application of a gateway device (30) to a system manager of the gateway device (30) for a network bandwidth comprising a first data transfer rate, the gateway device (30) being configured to connect field devices that use different network protocols;
receiving a first reply from the system manager as to whether the first data transfer rate is available for transfer of data from the gateway device (30) requesting the network bandwidth to a field device (50);
transferring the data via a network interface (26) from the gateway device (30) to the field device (50) when the first data transfer rate is available;
generating a second request via the host application of the gateway device (30) to the system manager of the gateway device (30) for a network bandwidth when the first data transfer rate is unavailable, wherein the second request comprises at least a second data transfer rate; and
transferring the data via the network interface (26) from the gateway device (30) to the field device (50) when the second data transfer rate is available.

2. The method of claim 1, further comprising:
generating the second request as a reduced data transfer rate; and transferring the data via the network interface (26) from the gateway device (30) to the field device (50) at the second reduced data transfer rate when the second reduced data transfer rate is determined to be available.

3. The method of claim 2, further comprising:
generating a third request when the second data transfer rate is unavailable for transfer of the data from the gateway device (30) to the field device (50), wherein the third request comprises a second reduced data transfer rate; and transferring the data via the network interface (26) from the gateway device (30) to the field device (50) at the third reduced data transfer rate when the third reduced data transfer rate is determined to be available.

4. The method of claims 1 to 3, further comprising:
generating the second request for transfer of the data from the gateway device (30) to at least the field device (50) and a second field device (50) sequentially based on a respective bandwidth availability of each of the field device (50) and the second field device (50), and transferring the data via the network interface (26) from the gateway device (30) to at least the field device (50) and the second field device (50) sequentially if the second data transfer rate is determined to be available.

5. The method of claim 4, further comprising:
generating a third request for a third data transfer rate, and transferring the data to at least the field device (50) at the third data transfer rate when the third data transfer rate is determined to be available.

6. The method of any of claims 1 to 5, further comprising:
transmitting the first request or the second request; and
transmitting the data to the field device (50) at a rate corresponding to whether the first reply or the second reply was received.

7. The method of any preceding claim, further comprising:
receiving an indication that transfer of the data from the gateway device (30) to at least the field device (50) at the second data transfer rate is unavailable; and
generating a third request for the first data transfer rate after a period of time following the second request for the second data transfer rate.

8. The method of claim 1, wherein the network interface (26) is configured to support a transfer of the data from the gateway device (30) to the field device (50), wherein the data comprises a firmware data package.

9. A computer program comprising computer program code means adapted to perform all the steps of the method of any preceding claim when executed by a computer.

10. The computer program of claim 9, embodied on a computer-readable medium.

11. A device (30) comprising:
a network interface (62);
a processor (60); and
a memory (54) adapted to store the computer program of claims 9 or 10, wherein the processor (60) is adapted to execute the stored computer program to perform all the steps of the method of claims 1 to 8.

## Patentansprüche

1. Verfahren zum dynamischen Zuweisen von Bandbreite innerhalb drahtloser Netzsysteme, das Folgendes umfasst:
das Erzeugen einer ersten Anforderung über eine Host-Anwendung einer Gateway-Einrichtung (30) an einen Systemverwalter der Gateway-Einrichtung (30) für eine Netzbandbreite, die eine erste Datenübertragungsgeschwindigkeit umfasst, wobei die Gateway-Einrichtung (30) dafür konfiguriert ist, Feldgeräte zu verbinden, die unterschiedliche Netzprotokolle verwenden,
das Empfangen einer ersten Antwort von dem Systemverwalter darüber, ob die erste Datenübertragungsgeschwindigkeit für eine Übertragung von Daten von der die Netzbandbreite anfordernden Gateway-Einrichtung (30) an ein Feldgerät (50) verfügbar ist,
das Übertragen der Daten über eine Netzschnittstelle (26) von der Gateway-Einrichtung (30) an das Feldgerät (50), wenn die erste Datenübertragungsgeschwindigkeit verfügbar ist,
das Erzeugen einer zweiten Anforderung über die Host-Anwendung der Gateway-Einrichtung (30) an den Systemverwalter der Gateway-Einrichtung (30) für eine Netzbandbreite, wenn die erste Datenübertragungsgeschwindigkeit nicht verfügbar ist, wobei die zweite Anfrage wenigstens eine zweite Datenübertragungsgeschwindigkeit umfasst, und
das Übertragen der Daten über die Netzschnittstelle (26) von der Gateway-Einrichtung (30) an das Feldgerät (50), wenn die zweite Datenübertragungsgeschwindigkeit verfügbar ist.

2. Verfahren nach Anspruch 1, das ferner Folgendes umfasst:
das Erzeugen der zweiten Anforderung als eine verringerte Datenübertragungsgeschwindigkeit und das Übertragen der Daten über die Netzschnittstelle (26) von der Gateway-Einrichtung (30) an das Feldgerät (50) mit der zweiten verringerten Datenübertragungsgeschwindigkeit, wenn festgestellt wird, dass die zweite verringerte Datenübertragungsgeschwindigkeit verfügbar ist.

3. Verfahren nach Anspruch 2, das ferner Folgendes umfasst:
das Erzeugen der dritten Anforderung, wenn die zweite Datenübertragungsgeschwindigkeit für eine Übertragung der Daten von der Gateway-Einrichtung (30) an das Feldgerät (50) nicht verfügbar ist, wobei die dritte Anfrage eine zweite verringerte Datenübertragungsgeschwindigkeit umfasst, und das Übertragen der Daten über die Netzschnittstelle (26) von der Gateway-Einrichtung (30) an das Feldgerät (50) mit der dritten verringerten Datenübertragungsgeschwindigkeit, wenn festgestellt wird, dass die dritte verringerte Datenübertragungsgeschwindigkeit verfügbar ist.

4. Verfahren nach den Ansprüchen 1 bis 3, das ferner Folgendes umfasst:
das Erzeugen der zweiten Anforderung für eine sequentielle Übertragung der Daten von der Gateway-Einrichtung (30) an wenigstens das Feldgerät (50) und ein zweites Feldgerät (50) auf der Grundlage einer jeweiligen Bandbreitenverfügbarkeit sowohl des ersten Feldgeräts (50) als auch des zweiten Feldgeräts (50) und das sequentielle Übertragen der Daten über die Netzschnittstelle (26) von der Gateway-Einrichtung (30) an wenigstens das Feldgerät (50) und ein zweites Feldgerät (50), wenn festgestellt wird, dass die zweite Datenübertragungsgeschwindigkeit verfügbar ist.

5. Verfahren nach Anspruch 4, das ferner Folgendes umfasst:
das Erzeugen der dritten Anforderung für eine dritte Datenübertragungsgeschwindigkeit und das Übertragen der Daten an wenigstens das Feldgerät (50) mit der dritten Datenübertragungsgeschwindigkeit, wenn festgestellt wird, dass die dritte Datenübertragungsgeschwindigkeit verfügbar ist.

6. Verfahren nach einem der Ansprüche 1 bis 5, das ferner Folgendes umfasst:
das Übertragen der ersten Anforderung oder der zweiten Anforderung und
das Übertragen der Daten an das Feldgerät (50) mit einer Geschwindigkeit, die dem entspricht, ob die erste Antwort oder die zweite Antwort empfangen wurde.

7. Verfahren nach einem der vorhergehenden Ansprüche, das ferner Folgendes umfasst:
das Empfangen eines Hinweises, dass ein Übertragen der Daten von der Gateway-Einrichtung (30) an wenigstens das Feldgerät (50) mit der zweiten Datenübertragungsgeschwindigkeit nicht verfügbar ist, und
das Erzeugen der dritten Anforderung für die erste Datenübertragungsgeschwindigkeit nach einem Zeitraum anschließend an die zweite Anforderung für die zweite Datenübertragungsgeschwindigkeit.

8. Verfahren nach Anspruch 1, wobei die Netzschnittstelle (26) dafür konfiguriert ist, eine Übertragung der Daten von der Gateway-Einrichtung (30) an das Feldgerät (50) zu unterstützen, wobei die Daten ein Firmware-Datenpaket umfassen.

9. Rechnerprogramm, das Rechnerprogrammcodemittel umfasst, die dafür eingerichtet sind, alle Schritte des Verfahrens nach einem der vorhergehenden Ansprüche durchzuführen, wenn sie durch einen Rechner ausgeführt werden.

10. Rechnerprogramm nach Anspruch 9, enthalten auf einem rechnerlesbaren Medium.

11. Vorrichtung (30), die Folgendes umfasst:
eine Netzschnittstelle (62),
einen Prozessor (60) und
einen Speicher (54), der dafür eingerichtet ist, das Rechnerprogramm von Anspruch 9 oder 10 zu speichern, wobei der Prozessor (60) dafür eingerichtet ist, das gespeicherte Rechnerprogramm auszuführen, um alle Schritte des Verfahrens nach den Ansprüchen 1 bis 8 durchzuführen.

## Revendications

1. Procédé d'attribution dynamique d'une largeur de bande dans des systèmes de réseaux sans fil, comprenant les étapes consistant à :
générer une première demande via une application hôte d'un dispositif passerelle (30) à un gestionnaire de système du dispositif passerelle (30) pour une largeur de bande de réseau comprenant un premier taux de transfert de données, le dispositif passerelle (30) étant configuré pour connecter des dispositifs de champ qui utilisent différents protocoles de réseau ;
recevoir une première réponse du gestionnaire de système quant à savoir si le premier taux de transfert de données est disponible pour le transfert de données du dispositif passerelle (30) demandant la largeur de bande de réseau à un dispositif de champ (50) ;
transférer les données via une interface réseau (26) du dispositif passerelle (30) au dispositif de champ (50) lorsque le premier taux de transfert de données est disponible ;
générer une deuxième demande via l'application hôte du dispositif passerelle (30) au gestionnaire de système du dispositif passerelle (30) pour une largeur de bande de réseau lorsque le premier taux de transfert de données n'est pas disponible, dans lequel la deuxième demande comprend au moins un deuxième taux de transfert de données ; et
transférer les données via l'interface réseau (26) du dispositif passerelle (30) au dispositif de champ (50) lorsque le deuxième taux de transfert de données est disponible.

2. Procédé selon la revendication 1, comprenant en outre :
la génération de la deuxième demande comme taux de transfert de données réduit ; et le transfert de données via l'interface réseau (26) du dispositif passerelle (30) au dispositif de champ (50) au deuxième taux de transfert de données réduit lorsque l'on détermine que le deuxième taux de transfert de données réduit est disponible.

3. Procédé selon la revendication 2, comprenant en outre :
la génération d'une troisième demande lorsque le deuxième taux de transfert de données n'est pas disponible pour le transfert des données du dispositif passerelle (30) au dispositif de champ (50), dans lequel la troisième demande comprend un deuxième taux de transfert de données réduit ; et le transfert des données via l'interface réseau (26) du dispositif passerelle (30) au dispositif de champ (50) au troisième taux de transfert de données réduit lorsque l'on détermine que le troisième taux de transfert de données réduit est disponible.

4. Procédé selon les revendications 1 à 3, comprenant en outre :
la génération de la deuxième demande pour le transfert des donnée du dispositif passerelle (30) au au moins le dispositif de champ (50) et un deuxième dispositif de champ (50) basé en séquence sur une disponibilité de largeur de bande respective de chacun du dispositif de champ (50) et du deuxième dispositif de champ (50), et le transfert des données via l'interface réseau (26) du dispositif passerelle (30) au au moins le dispositif de champ (50) et le deuxième dispositif de champ (50) en séquence si l'on détermine que le deuxième taux de transfert de données est disponible.

5. Procédé selon la revendication 4, comprenant en outre :
la génération d'une troisième demande pour un troisième taux de transfert de données et le transfert des données au au moins le dispositif de champ (50) au troisième taux de transfert de données lorsque l'on détermine que le troisième taux de transfert de données est disponible.

6. Procédé selon l'une quelconque des revendications 1 à 5, comprenant en outre :
la transmission de la première demande ou de la deuxième demande ; et
la transmission des donnée au dispositif de champ (50) à un taux correspondant à la première réponse ou à la deuxième réponse qui a été reçue.

7. Procédé selon l'une quelconque des revendications précédentes, comprenant en outre :
la réception d'une indication que le transfert des données du dispositif passerelle (30) au au moins le dispositif de champ (50) au deuxième taux de transfert de données n'est pas disponible ; et
la génération d'une troisième demande pour le premier taux de transfert de données après une période de temps suivant la deuxième demande pour le deuxième taux de transfert de données.

8. Procédé selon la revendication 1, dans lequel l'interface de réseau (26) est configurée pour supporter un transfert des données du dispositif passerelle (30) au dispositif de champ (50), dans lequel les données comprennent un paquet de données de progiciel.

9. Programme informatique comprenant des moyens de codage de programmes informatiques qui est à même d'effectuer toutes les étapes du procédé selon l'une quelconque des revendications précédentes lorsqu'il est exécuté par un ordinateur.

10. Programme informatique selon la revendication 9, mis en oeuvre sur un support lisible sur ordinateur.

11. Dispositif (30) comprenant :
une interface réseau (62) ;
un processeur (60) ; et
une mémoire (54) qui est à même de stocker le programme informatique des revendications 9 ou 10, dans lequel le processeur (60) est à même d'exécuter le programme informatique stocké pour effectuer toutes les étapes du procédé selon les revendications 1 à 8.
